# EUROPEAN PATENT APPLICATION

(11) **EP 3 569 332 A1**
(43) Date of publication of application: **20.11.2019**
(21) Application number: 18172073.1
(22) Date of filing: 14.05.2018
(51) Int. Cl.: B22F 3/105, G06T 17/00, B33Y 10/00, B33Y 50/00, B29C 64/386, G06T 7/00, B33Y 30/00

(54) **METHOD OF PROVIDING A DATASET, ADDITIVE MANUFACTURING METHOD, COMPUTER PROGRAM PRODUCT AND COMPUTER READABLE MEDIUM**

(71) Applicant: Siemens Aktiengesellschaft, 80333 München (DE); Siemens Industry Software NV, 3001 Leuven (BE)
(72) Inventor: Fergani, Omar, 52080 Aachen (DE); Geisen, Ole, 10781 Berlin (DE)

(57) **Abstract**

A method of providing a dataset (CPP) for an additive manufacturing process is presented. The method comprises, a), providing target value data (TVD) of a layer (L) for a component (10) to be additively manufactured in a powder bed (P), wherein the target value data (TVD) comprise CAD and/or CAM information of the layer (L), b), providing actual value data (AVD) indicating a solidification result of the layer (L), c), selecting a region of interest (ROI) of the layer (L) by means of the target value data (TVD) and, d), merging said target value data (TVD) with the actual value data (AVD) in the region of interest (ROI) to a modified dataset (CPP). Furthermore, an additive manufacturing method comprising said method and/or the modified dataset, a corresponding computer program product and a computer readable medium are presented.

## Description

The present invention relates to a method of providing a dataset for an additive manufacturing process. The dataset can be a verification dataset, e.g. for verifying a structural manufacturing result or a dimensional accuracy of an as-manufactured component. Said method may be further suitable or implemented in an additive manufacturing line or sequence in an iterative or closed-loop manner in order to optimize a manufacturing result of a specific component.

The present invention further relates to an according additive manufacturing method comprising said method of providing the dataset. Further, a computer program product as well as a computer readable storage medium are subject to the present invention.

Additive manufacturing techniques comprise e.g. powder bed methods, such as selective laser melting (SLM), selective laser sintering (SLS) or electron beam melting (EBM). Said processes, preferably, denote a layerwise, generative and/or bottom-up manufacturing.

A method of selective laser melting is described in EP 2 601 006 B1, for example.

Powder bed fusion manufacturing methods such as selective laser melting or electron beam melting are relatively well known methods prototyping and - increasingly also for the generative manufacture or parts or components from a powdery base material, such as a metal. Conventional apparatuses or setups for such methods usually comprise a build platform on which the component is built layer-by-layer after the feeding of a layer of base material which may then be melted, e.g. by the energy of a laser or electron beam and subsequently solidified. The layer thickness is determined by a deposition apparatus or a wiper that moves, e.g. automatically, over the powder bed and removes excess material. Typical layer thicknesses amount to 20 µm or 40 µm. During the manufacture, said "energy beam" scans over the surface and melts the powder on selected areas which may be predetermined by a CAD-file according to the geometry of the component to be manufactured.

Preferably, the component(s) which is to be manufactured by the described means denotes a component applied in a turbo machine, e.g. in the flow path hardware of a gas turbine. The component is thus preferably made of a superalloy or nickel-based alloy, particularly a precipitation hardened alloy. Although additive manufacturing capabilities allow to exploit huge design freedom, powder bed fusion of such materials is limited generally by the weldability of the corresponding alloys. It is, for example, currently a major issue to selectively melt, i.e. weld, the mentioned alloys with a sufficient or optimal structural quality, e.g. in terms of grain size and creep resistivity, thermo-mechanical stress and distortions.

Additive manufacturing methods have proven to be particularly useful and advantageous for the fabrication of geometrically complex and filigree components, such as lightweight design or cooling components comprising e.g. mazelike internal structures. Further, additive manufacturing stands out for its short chain of process steps, as a manufacturing step can be carried out based on corresponding CAD/CAM and/or construction data.

It is known that monitoring devices, e.g. optical cameras, microscopes, image sensors of further quality control means used to monitor industrial manufacturing processes require huge storage spaces to store data rendered during the manufacturing sequence. On one hand this allows for a steady improvement of the given processes and to gather a lot of information from the data. On the other hand, however, the huge data volumes are very difficult to process or manage, as it causes an excessive computing effort to process, interpret and/or analyse the data.

When focusing on the field of industrial additive manufacturing, as is increasingly applied, e.g. in the power generation, aerospace and automotive industry, it is already usual that hundreds of gigabytes of data are generated for each build job. The emerge of such huge amounts of data is owed to the abundance of single layers required to manufacture components with a desired spatial resolution. In case of SLM, a usual layer thickness of powder layers which are arranged on the build platform and selectively exposed to the laser lies usually in the range between 20 and 40 µm. Consequently tens of thousands of layers will be generated as well as monitored by the (build-in) sensor machinery of the manufacturing devices. Usually, high-resolution TIFF-files (abbreviation of "Tagged Image File Format") or TIF's are saved for each layer of powdery base material or as the case may be of the respective manufactured layer. Due to the complexity and also the information content of such "bulky" TIFF-images, there is a stringent demand to develop filters which help to ease and accelerate data processing. When such data processing can be improved and lengthy calculations can be avoided, this inevitably means advances for the actual (physical) manufacturing industry.

In current monitoring systems, the produced image for every layer allows a distinction between the components structure and the surrounding powder bed, e.g. by analysing the contrast between powdery and already solidified material of given layer by certain algorithms or optical recognition capabilities. It is state of the art, that for said part recognition, the entire build platform or build plate is analysed which leads to the mentioned huge computing times that are far too long as to process the data online, i.e. during the actual manufacture. Hence, provided that any deviations or defects are recorded by the given monitoring system, these can only be processed or analysed afterwards.

It is, thus, an object of the present invention to provide means which allow to ease, accelerate or simplify data processing, particularly in the industrial additive manufacturing field and therewith to improve and accelerate the additive manufacturing, particularly powder bed fusion processes itself. Hence, significant advances for the industrialisation of additive manufacturing can be achieved.

The mentioned object is achieved by the subject-matters of the independent claims. Advantageous embodiments are subject-matter of the dependent claims.

An aspect of the present invention relates to a method of providing or compiling a dataset for an additive manufacturing process. Said process preferably relates to selective laser melting or electron beam melting, anyway to powder bed fusion methods.

The method comprises providing target value data of a layer for a component to be additively manufactured in a powder bed, wherein the target value data comprise CAD and/or CAM information of the layer. Said target value data may denote set value data.

The term "layer" as used herein may refer to a physical layer of the component as well as to corresponding data merely indicating, e.g. a cross-sectional part of the component in the CAD/CAM model. The term "layer" may as well denote a manufacturing surface.

In an embodiment, the target value data constitute CAM data which in turn comprise geometric information of the component through a corresponding CAD dataset which has been rendered for the actual build job of the component. To this effect, preferably also CAD information is included in said target value data.

The method further comprises providing actual value data, e.g. output or rendered by a sensor or monitoring system of the given manufacturing machine hardware. According to the presented method said actual value data indicate or qualify a solidification result, a quality or structural rating of the layer, i.e. in this context preferably an as-deposited layer or cross-section of the component.

The method further comprises selecting a region of interest of the layer by means of or based on the target value data. In other words, the target value data are taken as a base, and may then be modified, processed and evaluated in a given way so as to define said region of interest. Therefore, the mentioned part recognition procedure may be included.

The method further comprises merging, overlying, or combining said target value data with the actual value data in the region of interest to or towards a modified dataset. The modified dataset can be as well a selected or combined dataset.

The given dataset can e.g. be provided entirely by a computer data processing device. Said dataset which may constitute a computer program product (see below) may - on the other hand - as well be (partly) generated or provided with the aid of further hardware devices or intellectual steps.

By the preparation of said dataset, the computing effort and/or image analysis, part recognition capabilities and finally a verification of structural quality and dimensional accuracy of the as-manufactured component can advantageously be improved. It is further a unique feature of said dataset that the way it is provided according to the present invention is independent of any manufacturing platform or machine hardware for the mentioned manufacturing processes.

By the given means a data processing effort is preferably reduced significantly and such that an "online" (i.e. during the actual manufacturing) structural verification can be performed. It is e.g. known to a skilled person that the underlying selective welding processes and its thermal management are difficult to control, as an energy put in the powdery base material causes a melt pool and strongly depends on the actual geometry as well as material of the component. If e.g. a local (destructive) heat entry occurs which would lead to waste and discarding the component, the manufacturing process may be cancelled as well as further destruction of the machine hardware be avoided. Currently, such online monitoring cannot be carried out due to the huge rendered data volumes.

As an advantage of the modified dataset which is provided by the described technical method, said dataset contains information of each or each selected layer of the component. Consequently, a structural or dimensional verification of the as-manufactured component can as well be evaluated layerwise and with a superior resolution.

In an embodiment, the actual value data represent the mentioned monitoring data of the layer, particularly representing areas of a powdery as well as a solidified material for the component.

In an embodiment, the region of interest defines an areal boundary, i.e. preferably a physical layerwise boundary enclosing a contour of the component in the layer. Said "contour", preferably, denotes edges of a cross-section of a single layer of or for the component. Thus, the definition of the boundary directly allows for reasonably selecting those areas of the layer which are actually very prone manufacturing defect, such as hot cracks or distortion. In other words, the boundary is preferably the base for further data analysis and conclusions of the solidification result. Said boundary is preferably selected outside of the theoretical cross-section of the component, i.e. the respective CAM-contour. Further, said boundary is preferably as well selected inside of contour so as to define a region of the layer significantly less in surface area, e.g. as compared to the whole manufacturing surface.

In an embodiment, a surface area of the region of interest is more than ten times smaller, than the surface area of the (whole) layer, e.g. the entire area of the build plate. By this embodiment the computing time and/or processing or evaluation effort of the relevant part of the layer can be reduced significantly.

In an embodiment, a storage space, data volume or memory capacity of the modified dataset and/or at the region of interest is more than ten times smaller than the storage space, data volume or memory capacity of the actual value data of the layer. By this embodiment, in other words, the computing time and/or processing or evaluation effort of the relevant part of the layer can be reduced significantly.

In an embodiment, a contour of the component or its irradiation geometry is characterised or defined by contour vectors of the target value data. Usually an inner region of any layer for the component is, on the other hand, characterised by so-called "hatching" vectors. The CAM and/or manufacturing or irradiation parameters (see process parameters below) chosen for the "hatching strategy" usually significantly differ from the parameters chosen for the "contouring strategy".

In an embodiment, the region of interest is selected such that the areal boundary is operator-defined. Said term "operator" shall mean, that a human, e.g. an operator of that one manufacturing machine which actually carries out the build job at issue, can select the given region of interest, e.g. for each or a plurality of layers for the component. On the other hand, "operator" may as well be understood as a computer or machine which proposes a reasonable region of interest, e.g. depending on a simulation result and a predefined geometry of the component.

In an embodiment, the region of interest is selected such that the areal boundary is non-symmetrically located with respect to the contour. The term "non-symmetrically" shall mean that said boundary or region of interest may be tailored to cover the critical areas of the powder bed, e.g. as a result of thermo-mechanical simulations and/or according to an expected emerge of distortions in the as-manufactured state of the component.

In an embodiment, the region of interest is selected layerwise for a part recognition of the component in the powder bed.

In an embodiment the modified dataset constitutes actual value data of or in the region of interest only.

In an embodiment, the modified dataset comprises actual value data as well as further data or information of or for the component, e.g. process parameters in general which may be superposed to said actual value data.

In an embodiment, the method is part of a target-actual comparison procedure.

In an embodiment, the method is used for an iterative or closed-loop optimisation of a structure, material quality or a dimensional accuracy of the component. Said structure, quality or dimensional accuracy may, during the given additive manufacturing processes, e.g. be impaired by the complicated emerge of distortion, stresses, shrinkage or, e.g. as a consequence of increased melt pool size and/or superficial porosity of the component when either an irradiation parameter is not selected properly or the type of material and geometry thereof has not been accounted for in a sufficient way.

In an embodiment, the actual value data represent data of a microscope, a camera, such as an optical camera and/or a high-speed camera, a CMOS camera, a pyrometer and/or an eddie current probe head, for example.

A further aspect of the present invention relates to an additive manufacturing method or sequence comprising a component verification (procedure) using the modified dataset as described above.

A further aspect of the present invention relates to a computer program or as the case may be a corresponding computer program product, comprising instructions which, when the program is executed by a computer, cause the computer to carry out the method steps as mentioned above. Said computer program product may constitute the modified dataset.

A further aspect of the present invention relates to a computer readable, preferable non-volatile, storage medium comprising instructions which, when executed by a computer, cause the computer to carry out the method steps as mentioned above.

A further aspect of the present invention relates to a computer readable, preferable non-volatile, storage medium comprising the modified dataset and/or said computer program product.

A further aspect of the present invention relates to a data structure product comprising or being characterised by the modified dataset.

Advantages relating to the described method of providing the dataset, the computer program, computer program product and/or the mentioned computer readable medium may as well pertain to the mentioned additive manufacturing method as described, and vice versa.

Further features, expediencies and advantageous refinements become apparent from the following description of the exemplary embodiment in connection with the Figures.
- Figure 1: indicates in a schematic view an additive powder bed fusion process with a component shown during its additive manufacture.
- Figure 2: indicates in a schematic top view a build platform, a plurality of components during or after the re-spective additive manufacturing.
- Figure 3: indicate in a schematic top view a layer of or for the component in the form of target value data, e.g. CAD and/or CAM data.
- Figure 4: indicates in a schematic top view a layer for the component with further details, wherein method steps according to the present invention are indi-cated.
- Figure 5: indicates in a schematic top view, inter alia, a layer of or for the component in the form of actual value data, e.g. monitoring data.
- Figure 6: shows a schematic flow chart indicating inventive method steps along with the preparation of a computer program product.

Like elements, elements of the same kind and identically acting elements may be provided with the same reference numerals in the figures.

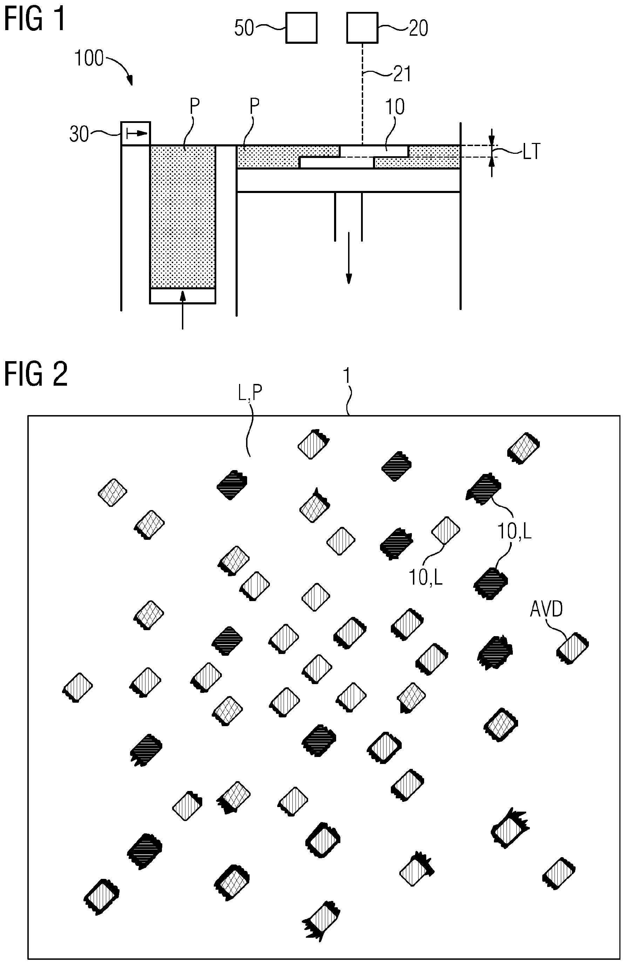

Figure 1 shows an additive manufacturing device 100. The device 100 may constitute a state of the art hardware for selective laser melting or electron beam melting. The device 100 comprises a build platform 1. On the build platform 1, a component 10 is preferably directly manufactured, i.e. welded. Preferably the component 10 is buildup in the device 100 out of a powder bed P. Said component or part 10 preferably relates to a turbine component, such as a component applied in the hot gas path of a gas turbine (not explicitly indicated). Particularly, the component 10 may relate to a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit.

In Figure 1, the component 10 is preferably depicted during its manufacture and only partly established yet. It is indicated that, after that deposition of a powder layer, e.g. with the aid of a deposition apparatus 30, an energy beam 21 is used to selectively melt the powder for the layerwise buildup of the component 10. A layer thickness of the layer may amount to LT, as indicated on the right in Figure 1.

Said energy beam 21 is preferably emitted from an irradiation apparatus 20, such as an electron beam or laser source. After the local melting due to the energy beam 21, the material expediently solidifies in the final structure for the component 10.

After a layer has been manufactured, the platform 1 is preferably lowered by a distance corresponding to the layer thickness LT. Further, the deposition apparatus 30 preferably distributes a further powder layer which may be moved from a stock or supply (not explicitly numerically indicated) of the respective powdery base material P as shown in the left of Figure 1.

Figure 1 further shows a monitoring device 50 of the device 100. Said monitoring device 50 is preferably provided to monitor the structural quality and/or a solidification result of an as-manufactures layer L of the component 10. Said monitoring device 50 is preferably a microscope, a camera, such as an optical camera, a thermographical camera and/or a CMOS camera. As well, high-speed and/or specific high-resolution cameras may be used. Alternatively, the monitoring device 50 may be a pyrometer or e.g. an eddie current probe head or any further means which may be used to supervise a solidification result of single layers during an additive build job.

Figure 2 shows a top view of the build platform 1. The image of Figure 2 particularly indicates a certain instant or state during the additive manufacture of a plurality of components 10. To this effect, preferably a layer L is shown representing areas of the powdery base material as well as areas in which the beam 21 has already selectively melted and buildup structures for the plurality of the components 10. Accordingly, said layer L may denote different cross sections of the plurality of components 10 which pertain to the same built height.

The image of Figure 2 may e.g. be recorded by the monitoring device 50 as described above. A recorded image as shown in Figure 2 is usually a high-resolution image, such as a TIFF-file (tiff-image) as a computer file format for storing e.g. raster graphics images.

Said image data provided by the monitoring device 50 preferably constitute set or actual value data of the component 10 or a part thereof. Further, said image data indicate a solidification result and/or structural quality of the given layer L. It is indicated in Figure 2 that said image comprises information of the whole layer, i.e. preferably the whole area of the build plate 1 or manufacturing plane. In this context, the layer L may denote that one area or plane which will be coated with a new powder layer for the further buildup of the component 10.

The image data as shown in Figure 2 may e.g. be taken as a base for a part recognition of one, several or all of the components 10 which are arranged in the powder bed P (cf. Figure 1). Said part recognition is e.g. interesting for a target-actual comparison procedure comparing a target state of the component 10 with an actual (as-manufactured) state thereof. By results from such procedures, an additive manufacturing process or sequence may be significantly improved and the component 10 may then be manufactured more reliably and reproducibly in terms of dimensional accuracy and with an improved microstructure, material and/or phase composition. Thus, also material properties of the component may be controlled in an improved way.

For instance, the recorded actual value images, i.e. the monitoring data, may be analysed and by means of such analysis, process parameters of a subsequent build job, preferably for the entire manufacturing line of that component, may be adjusted. In other words, an iterative or closed-loop optimisation of structure and/or dimensional accuracy of the component may be carried out.

The recorded images as exemplified in Figure 2 usually comprise a huge data volume due to the high-resolution nature of the images which is required for reliably recording and/or evaluating the result of the solidification of the component in a layerwise manner. The overall data volume, storage space or archive capacity usually generated during a single build job of the component 10 by way of said monitoring images may easily amount to hundreds of gigabytes or even terabytes. Such data amounts do not allow for an evaluation of each of the recorded features in a reasonable time sufficient as to already account for conclusions or parameter adjustments during the build job.

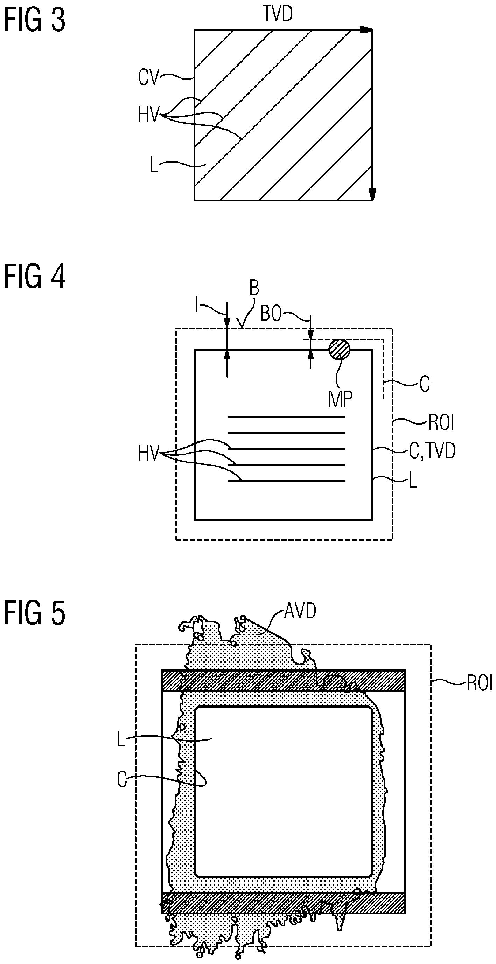

Figure 3 indicates an irradiation strategy usually carried out in so-called CAM ("computer aided manufacturing") processes. The image of Figure 3 represents a theoretical image of the layer L for the component 12 by way of CAD- and/or CAM-data, or more generally, target value data (TVD) for the component 10. The image of Figure 3 preferably also contains geometry information of the component 10, i.e. information of the corresponding CAD file. Only for simplification reasons, an ideal square-shaped layer L for the component is shown. It is of course perceivable that said layer L may have any desired dimensions or shapes. The layer L may for example represent any of the plurality of component layers as shown in Figures 1 and 2.

Particularly, the layer L comprises a contour C and/or contour vectors CV as indicated by the arrows at the edges of the layer L. Said contour C preferably defines the lateral dimensions of said layer L. To this effect, the contour vectors CV are chosen for an irradiation of the powder bed P in order to build up the respective layer for the component 10.

An inner area - enclosed by the contour C or as the case may be the contour vectors CV - is usually irradiated in stripes or in a meander- or chess-like pattern. In the given example, obliquely oriented hatching vectors HV are indicated which illustrate the irradiation strategy in the central region of the layer L. It is known to a skilled operator or expert in the field of additive manufacturing that process parameters for the hatching area usually differ from the ones to be chosen for the contours C of the components layers L.

Figure 4 indicate further details of an irradiation process of a layer L for the component 10 in a simplified scheme. Similar to the indication of Figure 3, horizontal hatching vectors HV are shown enclosed by a contour C, e.g. indicating the respective laser trajectories. Further, a circle indicated with numeral MP is shown on the contour C which indicates a melt pool generated by the corresponding energy beam (cf. numeral 21 in Figure 1). Moreover, a beam offset is indicated with numeral BO in Figure 4. This offset BO is measured between the contour C and the dashed line in the upper right corner (cf. C ') of the layer L indicating expected edges or boundaries C' of the given component 10. Said beam offset may be chosen to respectively account for the finite dimensions of the melt pool MP.

According to the present invention, a method is presented, which provides a dataset, wherein said contour or CAM information are provided or rendered as target value data TVD and the above-mentioned monitoring data are provided are rendered as actual value data of the component 10. Further, a region of interest ROI as indicated in Figure 4 is selected by means of the target value data and, subsequently, said target value data are merged with the actual value data in the region of interest towards the inventive modified dataset. Said region of interest ROI may constitute a frame of the contour C. Moreover, said region of interest ROI may define an interval I along the contour C. Said interval I may extend from the contour C or C' towards an outside of the layer L or an areal boundary B.

Said interval I and/or the boundary B may further be predefined and span a security range (security interval) around the contour C in which built-in defects or flaws, such as distortions, hotspots or further adverse solidification effects are likely expected to occur. As such faults tend to occur around a specific region around the target contour C of the layer L, said region of interest ROI and/or boundary B is preferably chosen to cover an aerial range in which such defects are expected, simulated and/or calculated. Accordingly the region of interest ROI is preferably selected operator- and/or machine-defined. Additionally or alternatively, the region of interest ROI may be non-symmetrically located with respect to the contour C, as shown in Figures 4 and 5 (see below).

Figure 5 indicates schematically the modified dataset as provided by the method according to the present invention. Similarly to Figures 3 and 4, the contour C of the layer L is shown as target value data TVD. Moreover - as indicated in Figure 1 - the actual value data AVD of the monitoring device 50 are overlaid, combined or superposed to the TVD. Still further the region of interest is indicated as a dashed frame, enclosing the layer L with its contour C and an indicated colour range denoting, e.g. a topology or height or Z-values of the layer L in the powderbed P.

The region of interest ROI is preferably selected such that a surface area of the region of interest ROI is more than 10 times smaller, preferably 50 or 100 times smaller, than the surface area of the layer L as a whole.

Said region of interest ROI (cf. particularly Figures 4 and 5) may represent a cutaway of target value data overlaid on the monitoring data in order to accelerate and/or improve data processing as mentioned above.

The mentioned modified dataset may be a data structure product.

The mentioned modified dataset may as well be a computer program product CPP. To this effect, the given method may be or may be executed by a computer program.

Further, the region of interest ROI is preferably selected such that, a storage space of the modified dataset CPP and/or the region of interest ROI is more than 10 times smaller, preferably 50 or 100 times smaller, than the storage space of the actual value data AVD of the layer L as a whole.

With reference to Figure 1, these aspects shall preferably be understood such that each of the components 10 shown in Figure 1 is provided with a separate region of interest ROI.

According to the present invention, the region of interest ROI is selected layerwise and at least every 10, 50 or 100 layers of a given component 10. Hence, the modified dataset and/or the given computer program product or data structure product may be used for a part recognition of the component 10 in the powder bed P (cf. above).

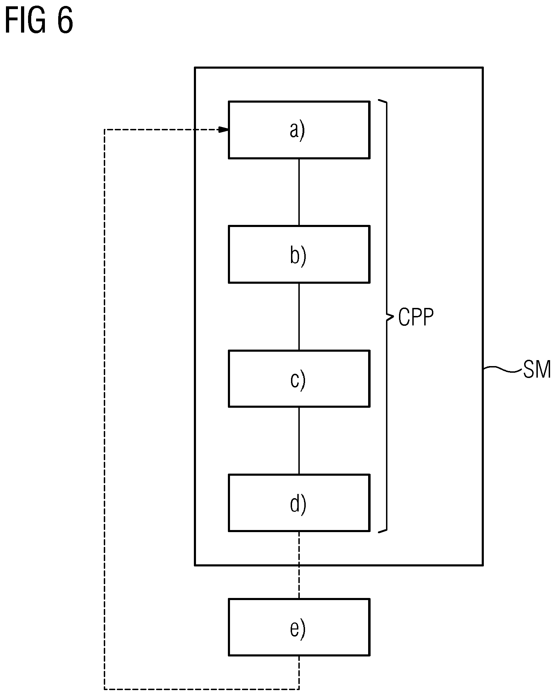

For instance, the modified dataset and/or said computer program product CPP (cf. also figure 6) may constitute actual value data AVD of the region of interest ROI only.

Alternatively, the modified dataset and/or the computer program product CPP may comprise said monitoring information as actual value data AVD as well as further data, information or instructions, such as process parameters overlaid, superposed or combined with the given actual value data AVD.

The number of process parameters accordingly describing or comprehensively characterizing a layer L for a structurally sophisticated component 10, such as a burner component of a gas turbine, may easily exceed the number of 100. The further quantities, e.g. as well be understood as process parameters: Layer thickness, melt pool geometry, heat impact per volume or area unit, laser wavelength, hatching distance (not explicitly indicated), i.e. distance of adjacent scanning lines, beam offset BO, beam speed, melt pool dimension, geometry of beam spot, beam angle, type of purge gas, flow rate of purge gas, flow rate of possible exhaustion gas, states of gas valves, set ambient pressure prior to or during build job, state of base material, i.e. the quality.

Figure 6 further indicates method steps of the present invention. Said method is a method of providing a dataset CPP for an additive manufacturing process as described above. The method comprises, a), providing target value data TVD of a layer L for a component 10 to be additively manufactured in a powder bed P, wherein the target value data TVD comprise CAD and/or CAM information of the layer L, as described above.

The method further comprises, b), providing actual value data AVD indicating a solidification result of the layer L, as described above.

The method comprises, c), selecting a region of interest ROI of the layer L by means of the target value data TVD, as described above and, d) merging said target value data TVD with the actual value data AVD in the region of interest ROI to a modified, dataset CPP.

The presented method (cf. steps a) to d)) may entirely be carried out or executed by a computer program, and thus constitute a computer program product CPP. Said computer program product CPP and/or modified dataset may further be comprised by or stored or archived on a storage medium SM, as shown in Figure 6, preferably nonvolatile computer readable storage medium SM.

Method step e) as indicated in Figure 6 shall indicate an actual or physical additive manufacturing process making use of or follow the given method of providing the modified dataset.

The given closed-loop and/or close feedback functionality as mentioned above is, preferably, indicated by the dashed line combining the block of method step e) with the beginning of the sequence, i.e. method step a).

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method of providing a dataset (CPP) for an additive manufacturing process, the method comprising the steps of:
- a) providing target value data (TVD) of a layer (L) for a component (10) to be additively manufactured in a powder bed (P), wherein the target value data (TVD) comprise CAD and/or CAM information of the layer (L),
- b) providing actual value data (AVD) indicating a solidification result of the layer (L),
- c) selecting a region of interest (ROI) of the layer (L) by means of the target value data (TVD), and
- d) merging said target value data (TVD) with the actual value data (AVD) in the region of interest (ROI) to a modified dataset (CPP).

2. Method according to claim 1, wherein the actual value data (AVD) represent monitoring data of the layer (L), particularly representing areas of a powdery as well as a solidified material for the component (10).

3. Method according to claim 1 or 2, wherein the region of interest (ROI) defines an areal boundary (B) enclosing a contour (C) of the component (10) in the layer (L).

4. Method according to claim 3, wherein the contour (C) of the component (10) is **characterized by** contour vectors (CV) of the target value data (TVD).

5. Method according to claim 3 or 4, wherein the region of interest (ROI) is selected such that the areal boundary (B) is operator-defined and preferably non-symmetrically located with respect to the contour (C).

6. Method according to one of the previous claims, wherein the region of interest (ROI) is selected layerwise for a part recognition of the component (10) in the powder bed (P).

7. Method according to one of the previous claims, wherein a surface area of the region of interest (ROI) is more than ten times smaller, than the surface area of the layer (L).

8. Method according to one of the previous claims, wherein a storage space of the modified dataset (CPP) and/or the region of interest (ROI) is more than ten times smaller than the storage space of the actual value data (AVD) of the layer (L) .

9. Method according to one of the previous claims, wherein the modified dataset (CPP) constitutes actual value data (AVD) of the region of interest (ROI) only.

10. Method according to one of the previous claims being part of a target-actual comparison procedure.

11. Method according to one of the previous claims, being used for an iterative or closed-loop optimisation of a dimensional accuracy of the component (10).

12. Method according to one of the previous claims, wherein the actual value data (AVD) represent data of a microscope, a camera, such as an optical camera, a thermographical camera and/or a CMOS camera, a pyrometer and/or an eddie current probe head.

13. Additive manufacturing method comprising a component verification using the modified dataset (CPP) according to one of the previous claims.

14. Computer program product (CPP) comprising instructions which, when the program is executed by a computer, cause the computer to carry out the steps of one of claims 1 to 12.

15. A computer-readable medium (SM) comprising instructions which, when executed by a computer, cause the computer to carry out the steps of one of claims 1 to 12.
